# EUROPEAN PATENT APPLICATION

(11) **EP 2 395 806 A1**
(43) Date of publication of application: **14.12.2011**
(21) Application number: 09839869.6
(22) Date of filing: 10.02.2009
(51) Int. Cl.: H04W 88/00, H04W 24/02

(54) **METHOD FOR SENDING RADIO FRAMES, BASE STATION AND NETWORK SYSTEM**

(71) Applicant: Huawei Technologies Co., Ltd., Longgang District Shenzhen 518129 (CN)
(72) Inventor: DONG, Pengpeng, Guangdong 518129 (CN); ZHAO, Zhilin, Guangdong 518129 (CN)
(74) Representative: Thun, Clemens
(86) International application number: PCT/CN2009/070390
(87) International publication number: WO 2010/091546

(57) **Abstract**

A method for transmitting radio frames includes: determining frame numbers of radio frames to be measured by a mobile station (MS) which is one of paired MSs sharing a same timeslot; and transmitting radio frames to both of the paired MSs at positions of the radio frames identified by the frame numbers. A base station (BS) includes: a determining unit, configured to determine frame numbers of radio frames to be measured by an MS which is one of paired MSs sharing a same timeslot, and a transmitting unit, configured to transmit radio frames to both of the paired MSs at the positions of the radio frames identified by the frame numbers. A network system includes a BS, configured to determine frame numbers of radio frames to be measured by an MS which is one of paired MSs sharing a same timeslot, and transmit radio frames to both of the paired MSs at positions of the radio frames identified by the frame numbers.

## Description

### FIELD OF THE INVENTION

The present invention relates to communication technologies, and in particular, to a method, base station (BS), and network system for transmitting radio frames.

### BACKGROUND OF THE INVENTION

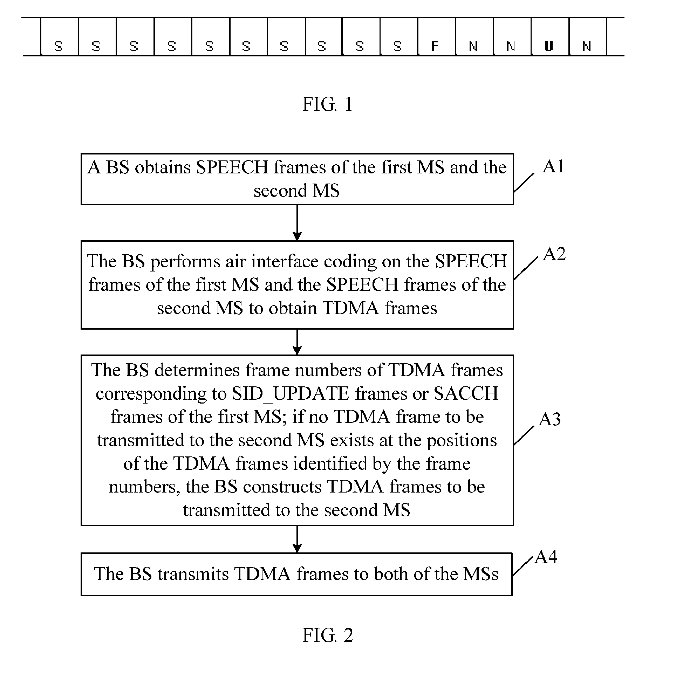

In the prior art, after discontinuous transmission (DTX) is enabled on a traffic channel (TCH), for an adaptive multi-rate (AMR) service, no fixed time division multiple access (TDMA) frame number is available for transmitting a SID_UPDATE frame in the DTX phase. Specifically, the frame structure of the AMR service is shown in FIG 1. In the frame structure, S is a SPEECH frame, F is a SID_FIRST frame (the first silence insertion descriptor frame), U is a SID_UPDATE frame (an updated silence insertion descriptor frame), and N is a NO_DATA frame (a silence SPEECH frame, which means no data is transmitted). The DTX phase starts from the SID_FIRST frame; if no SPEECH frame needs to be transmitted after the SID_FIRST frame, two NO_DATA frames are transmitted and then one SID_UPDATE frame is transmitted; if the silence state continues and no SPEECH frame needs to be transmitted, a new SID_UPDATE frame is transmitted after every eight frames subsequently, and other frames are NO_DATA frames. The purpose of transmitting the SID_UPDATE frame is to transmit the environmental noise to a mobile station (MS) in the silence state, so that the MS can detect the environmental noise and the user experience can be improved.

For the AMR service, the MS needs to report measurement values (received power level RXLEV_FULL, and received quality level RXQUAL_FULL, RXLEV_SUB, and RXQUAL_SUB) in the measurement report; to obtain the measurement values RXLEV_SUB and RXQUAL_SUB, the MS needs to measure the slow associated control channel (SACCH) frames and SID_UPDATE frames in the DTX phase.

In the conventional radio communication field, the voice service over adaptive multi-user on one slot (AMOS) technology can provide two sub-channels so that two MSs can work on the same radio resource; each MS occupies a sub-channel which is distinguished by an orthogonal or approximately orthogonal training sequence, and the two MSs are paired MSs. In the prior art, the two paired MSs in the AMR service measure respectively SACCH frames and SID_UPDATE frames in the DXT phase, obtain RXLEV_SUB and RXQUAL_SUB measurement values, and report the values to a BS.

The prior art has the following weaknesses:
For the paired MSs, because each speech ends at different time, no fixed TDMA frame is available for the BS to transmit the SID_UPDATE frame; when the BS transmits the TDMA frame of the SID_UPDATE or SACCH frame to the first MS, the second MS is in the NO_DATA state, indicating no TDMA frame is available for transmission, and thus no transmission power exists; therefore, in this case, interference of the second MS on the first MS disappears, and as a result, when the first MS measures the SID_UPDATE or SACCH frame, the RXLEV_SUB and RXQUAL_SUB measurement values obtained are too optimum to reflect pairing performance correctly.

### SUMMARY OF THE INVENTION

Embodiments of the present invention provide a method, base station, and network system for transmitting radio frames to ensure that radio frames are transmitted to both of paired MSs at positions of the radio frames corresponding to the frame numbers of the radio frames to be measured.

Embodiments of the present invention provide a method, base station, and network system for transmitting radio frames as follows.

A method for transmitting radio frames includes:
determining frame numbers of radio frames to be measured by an MS which is one of paired MSs sharing a same timeslot; and
transmitting radio frames to both of the paired MSs at positions of radio frames identified by the frame numbers.

ABS includes:
a determining unit, configured to determine frame numbers of radio frames to be measured by an MS which is one of paired MSs sharing a same timeslot; and
a transmitting unit, configured to transmit radio frames to both of the paired MSs at positions of radio frames identified by the frame numbers.

A network system includes:
a BS, configured to determine frame numbers of radio frames to be measured by an MS which is one of paired MSs sharing a same timeslot, and transmit radio frames to both of the paired MSs at positions of radio frames identified by the frame numbers.

In embodiments of the present invention, the frame numbers of radio frames to be measured by the MS are determined, and radio frames are guaranteed to be transmitted to both of the paired MSs at the positions of radio frames identified by the frame numbers, so as to ensure that when radio frames that is to be measured by an MS is transmitted, the radio frames are also transmitted to another MS, and ensure that when an MS measures the radio frames that is to be measured in the DTX phase, interference of another MS on the MS still exists. As a result, correct measurement values of RXLEV_SUB and RXQUAL_SUB can be obtained.

### BRIEF DESCRIPTION OF THE DRAWINGS

FIG 1 is a structure diagram of a data frame of an AMR service;
FIG 2 is a flowchart of a method for transmitting radio frames according to a second embodiment of the present invention;
FIG 3 is a schematic diagram of bit filling in adaptive full rate speech (AFS) mode according to the second embodiment of the present invention;
FIG 4 is a schematic diagram of bit filling in adaptive half rate speech (AHS) mode according to the second embodiment of the present invention;
FIG 5 is a flowchart of a method for transmitting radio frames according to a third embodiment of the present invention;
FIG 6 is a flowchart of a method for transmitting radio frames according to a fourth embodiment of the present invention; and
FIG 7 is a structure diagram of a base station according to a fifth embodiment of the present invention.

### DETAILED DESCRIPTION OF THE EMBODIMENTS

### Embodiment 1

A first embodiment provides a method for transmitting radio frames. The method includes:
determining frame numbers of radio frames to be measured by an MS which is one of paired MSs sharing a same timeslot; and
transmitting radio frames to both of the paired MSs at positions of radio frames identified by the frame numbers.

In the first embodiment of the present invention, the frame numbers of radio frames to be measured by the MS are determined, and radio frames are guaranteed to be transmitted to both of paired MSs at the positions of the radio frames identified by the frame numbers so that radio frames are transmitted to MSs even though no radio frame is available at the positions of the radio frames identified by the frame numbers. Therefore, when radio frames to be measured by an MS are transmitted, radio frames are also guaranteed to be transmitted to another MS; when an MS measures the radio frames to be measured in the DTX phase, interference of another MS on the MS still exists, thus ensuring that correct measurement values of RXLEV_SUB and RXQUAL_SUB can be obtained. In this way, the RXLEV_SUB and RXQUAL_SUB measurement values of paired MSs in the AMR service under VAMOS may reflect pairing performance correctly to guide the BS to control power and adjust alpha-quaternary phase shift keying (alpha-QPSK) paired power. The radio frames may be TDMA frames in the subsequent embodiments.

### Embodiment 2

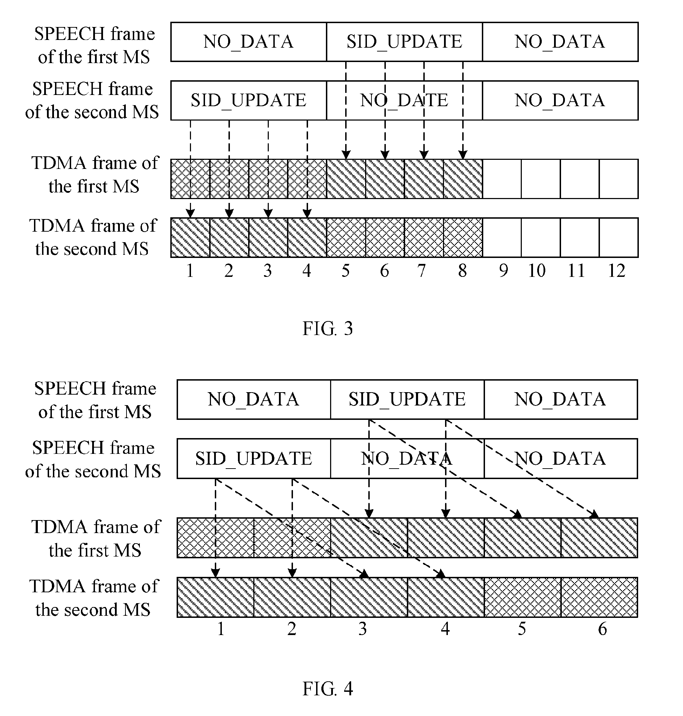

As shown in FIG 2 to FIG 4, a second embodiment provides a method for transmitting radio frames. FIG 2 is a flowchart of a method for transmitting radio frames; FIG 3 is a schematic diagram of bit filling in AFS mode; FIG 4 is a schematic diagram of bit filling in AHS mode. The method includes the following steps.

A1. A BS obtains SPEECH frames of multiple MSs including paired MSs (a first MS and a second MS).

A2. The BS performs air interface coding on the SPEECH frames of the first MS and the SPEECH frames of the second MS to obtain TDMA frames.

A3. The BS determines frame numbers of TDMA frames corresponding to SID_UPDATE frames or SACCH frames of the first MS; if no TDMA frame to be transmitted to the second MS exists at the positions of the TDMA frames identified by the frame numbers, the BS constructs TDMA frames to be transmitted to the second MS.

Specifically, the TDMA frames may be constructed in random bit filling mode.

In this step, newly defined frames or existing frames may also be filled in the SPEECH frames, which is corresponding to the positions of the radio frames identified by the frame numbers, of the second MS; in the frame sequence of the second MS, the existing frames are SPEECH frames before the SPEECH frames corresponding to the positions of the radio frames identified by the frame numbers, for example, SID_FIRST frames or SID_UPDATE frames; the newly defined frames may include power control information.

The newly defined frames are invalid for the conventional MS but valid only for the new MS. The identification marker (IM) of the newly defined frames is irrelevant to that of the existing frames whenever possible to avoid being detected as other frames. After receiving the newly defined frames, the new MS can control power better according to the newly defined frames. In the second embodiment, during air interface coding, if no TDMA frame to be transmitted to the second MS exists at the positions of the TDMA frames identified by the frame numbers, the BS fills bits in the corresponding positions to construct TDMA frames. In TCH/AFS mode, during air interface coding, SID_UPDATE frames are interleaved with four consecutive TDMA frames, SACCH frames are interleaved with four discrete TDMA frames, and SPEECH frames occupy 20 ms which is equivalent to four timeslots. In TCH/AHS mode, SID_UPDATE frames are interleaved with four consecutive TDMA frames, SACCH frames are interleaved with four discrete TDMA frames, and SPEECH frames occupy 20 ms which is equivalent to two timeslots.

The following takes the SID_UPDATE frame as an example to describe random bit filling in TCH/AFS and TCH/AHS modes according to embodiments of the present invention.

FIG 3 illustrates random bit filling in TCH/AFS mode. For the TDMA frames (TDMA frames pointed by dotted arrows in FIG. 2, with frame numbers 1, 2, 3, 4) transmitting SID_UPDATE frames of the second MS, because the positions of the TDMA frames identified by the frame numbers correspond to the NO_DATA frames of the first MS, no TDMA frame to be transmitted to the first MS exists during air interface coding, and TDMA frames to be transmitted to the first MS are constructed in bit filling mode. Likewise, for the TDMA frames (TDMA frames pointed by dotted arrows in FIG. 2, with frame numbers 5, 6, 7, 8) transmitting SID_UPDATE frames of the first MS, because the positions of the TDMA frames identified by the frame numbers correspond to the NO_DATA frames of the second MS, no TDMA frame to be transmitted to the second MS exists during air interface coding, and TDMA frames to be transmitted to the second MS are constructed in bit filling mode.

FIG 4 illustrates random bit filling in TCH/AHS mode. For the TDMA frames (TDMA frames pointed by dotted arrows in FIG. 3, with frame numbers 1, 2, 3, 4) transmitting SID_UPDATE frames of the second MS, because TDMA frames, which is corresponding to the positions of the TDMA frames identified by frame numbers 3 and 4, of the first MS transmit first half frames of the SID_UPDATE frames, and the positions of the TDMA frames identified by frame numbers 1 and 2 correspond to the NO_DATA frames of the first MS, no TDMA frame to be transmitted to the first MS exists during air interface coding, and TDMA frames to be transmitted to the first MS are constructed in bit filling mode. Likewise, for the TDMA frames (TDMA frames pointed by dotted arrows in FIG. 3, with frame numbers 3, 4, 5, 6) transmitting SID_UPDATE frames of the first MS, because the positions of the TDMA frames identified by frame numbers 5 and 6 correspond to the NO_DATA frames of the second MS, no TDMA frame to be transmitted to the second MS exists during air interface coding, and TDMA frames to be transmitted to the second MS are constructed in bit filling mode.

A4. The BS transmits TDMA frames to both of the MSs.

The specific transmission mode is: transmitting TDMA frames with the same frame number simultaneously, that is, transmitting the constructed TDMA frames to the second MS when TDMA frames corresponding to the SID_UPDATE frames or SACCH frames are transmitted to the first MS.

In FIG. 3, TDMA frames numbered as 1, 2, 3, and 4 are used to transmit SID_UPDATE frames to the second MS, and are used to transmit random bits to the first MS. In FIG. 4, TDMA frames numbered as 1, 2, 3, and 4 are used to transmit SID_UPDATE frames to the second MS; TDMA frames numbered as 1 and 2 are used to transmit random bits to the first MS; TDMA frames numbered as 3 and 4 are used to transmit first half frames of SID_UPDATE frames to the first MS. Power of transmitting random bits is the same as the transmission power during a call of the MS.

The processing on the MS is the same as the prior art: measuring SACCH frames and SID_UPDATE frames in each measurement period to obtain RXLEV_SUB and RXQUAL_SUB measurement values.

In the second embodiment, to be compatible with the case that the conventional MS does not perform RXLEV_SUB and RXQUAL_SUB measurement until SID_UPDATE frames and SACCH frames are received, the BS determines the frame numbers of the TDMA frames to be measured by an MS, and also transmits TDMA frames to another MS at the positions of the TDMA frames identified by the frame numbers, and transmits the TDMA frames at the power same as the transmission power during a call of the MS. Therefore, when an MS measures the TDMA frames to be measured in the DTX phase subsequently, interference of another MS on the MS still exists, so as to ensure that RXLEV_SUB and RXQUAL_SUB measurement values of the MS are correct. In this way, the RXLEV_SUB and RXQUAL_SUB measurement values can guide the BS to control power and adjust alpha-QPSK paired power.

### Embodiment 3

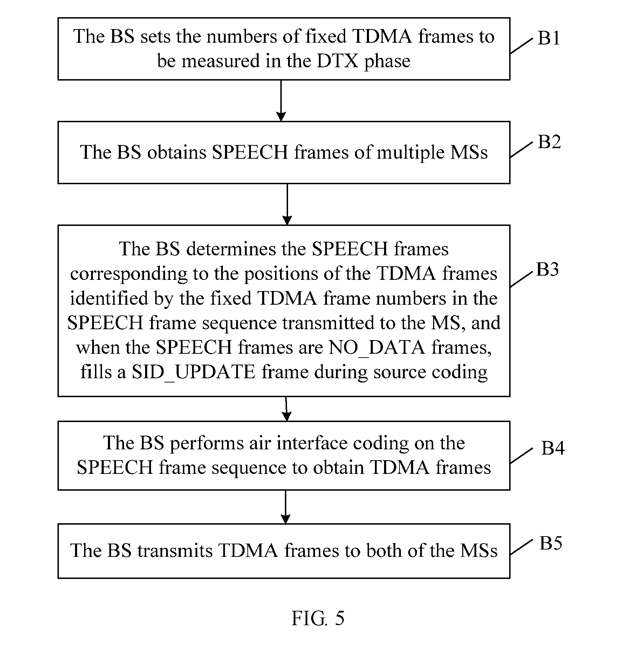

As shown in FIG 5, a third embodiment provides a method for transmitting radio frames. In this embodiment, a BS transmits SID_UPDATE frames in fixed TDMA frames, and the second embodiment is applicable to a TCH/AFS mode. The method includes the following steps:
B1. The BS sets numbers of fixed TDMA frames to be measured in a DTX phase, and Table 1 shows the numbers of the fixed TDMA frames to be measured in the DTX phase in VAMOS.

**Table 1**

| | |
|---|---|
| TCH/AFS | 52, 53, 54, 55 |
| TCH/AHS subchannel0 | 0, 2, 52, 54 |
| TCH/AHS subchannel1 | 14, 16, 66, 68 |

It should be noted that: this table shows the fixed TDMA frame numbers set in TCH/AFS and TCH/AHS modes; the fixed TDMA frame numbers set in TCH/AFS mode are applicable to the second embodiment, and the fixed TDMA frame numbers set in TCH/AHS mode are applicable to the subsequent third embodiment.
The numbers of fixed TDMA frames to be measured in the DTX phase in the second embodiment and the subsequent third embodiment may be different from those in the prior art.
B2. The BS obtains SPEECH frames of multiple MSs including paired MSs.
B3. In the SPEECH frame sequence transmitted to the MS, the BS determines the SPEECH frames corresponding to the positions of the TDMA frames identified by the numbers of the fixed TDMA frame, and when the SPEECH frames are NO_DATA frames, fills a SID_UPDATE frame during source coding.
The SID_UPDATE frame may be a latest SID_UPDATE frame.
B4. The BS performs air interface coding on the SPEECH frame sequence to obtain TDMA frames.
B5. The BS transmits TDMA frames to paired MSs.

The specific transmission mode is: transmitting TDMA frames with the same frame number at the same time.

It should be noted that if the call of the MS just begins and no SID_UPDATE frame is generated yet, no SID_UPDATE frame can be obtained; in this case, in step B3 the BS fills random bits in the SPEECH frames corresponding to the positions of the TDMA frames identified by the fixed TDMA frame numbers. In this way, when the MS cannot demodulate the frames after receiving the data transmitted by the BS later, the user experience is not affected basically.

If in step B3, a latest SID_UPDATE frame is filled for one of the paired MSs during source coding, in step B5, the latest filled SID_UPDATE frame is transmitted to the MS; when the MS detects the SID_UPDATE frame later, the MS recovers the comfort noise carried in the latest SID_UPDATE frame.

In the third embodiment, the BS sets the positions of the TDMA frames identified by fixed TDMA frame numbers to transmit SID_UPDATE frames; if the SPEECH frames corresponding to one of paired MSs at the TDMA positions identified by the TDMA frame numbers are NO_DATA frames, a latest SID_UPDATE frame is filled and is transmitted to ensure that TDMA frames are transmitted to both of the paired MSs. Therefore, when an MS measures the TDMA frames to be measured in the DTX phase later, interference of another MS on the MS still exists normally, so as to ensure that RXLEV_SUB and RXQUAL_SUB measurement values of the MS are correct. In this way, the RXLEV_SUB and RXQUAL_SUB measurement values can guide the BS to control power and adjust alpha-QPSK paired power, and the receiver can detect the latest environment noise in the latest filled SID_UPDATE frame.

### Embodiment 4

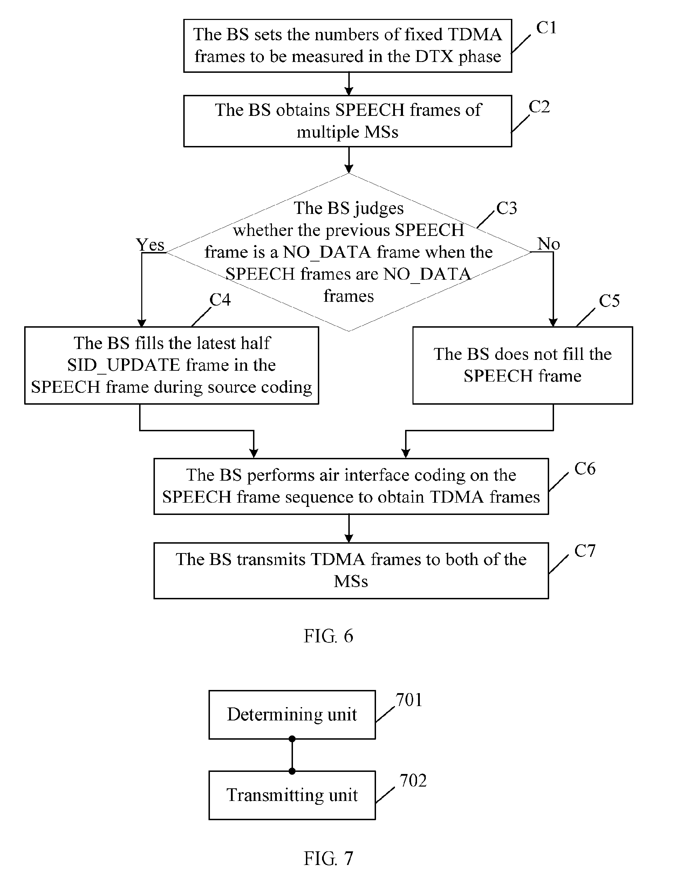

As shown in FIG 6, a fourth embodiment provides a method for transmitting radio frames. In this embodiment, a BS transmits SID_UPDATE frames in fixed TDMA frames, and this embodiment is applicable to a TCH/AFS mode. The method includes the following steps:
C1. The BS sets numbers of fixed TDMA frames to be measured in the DTX phase.
C2. The BS obtains SPEECH frames of multiple MSs including paired MSs.
C3. In a SPEECH frame sequence transmitted to the MS, the BS determines the SPEECH frames corresponding to the positions of the TDMA frames identified by the numbers of fixed TDMA frame. When the SPEECH frames are NO_DATA frames, judges whether a previous SPEECH frame is a NO_DATA frame; if the previous SPEECH frame is a NO_DATA frame, the BS executes step C4; if the previous SPEECH frame is not a NO_DATA frame, the BS executes step C5.
C4. The BS fills a latest half SID_UPDATE frame in the SPEECH frame during source coding, and executes step C6.
C5. The BS does not fill the SPEECH frame during source coding.
   If the previous SPEECH frame is not a NO_DATA frame, it may be a SID_UPDATE frame or a SID_FIRST frame. During the subsequent air interface coding, the SID_UPDATE frame or the SID_FIRST frame will overwrite the NO_DATA frame, that is, data of the SID_UPDATE frame or the SID_FIRST frame will be filled in the TDMA frames identified by the fixed frame numbers. Therefore, filling is not required in this step.
C6. The BS performs air interface coding on the SPEECH frame sequence to obtain TDMA frames.
C7. The BS transmits TDMA frames to paired MSs.

It should be noted that if a call of the MS just begins and no SID_UPDATE frame is generated yet, half SID_UPDATE frame cannot be obtained; in this case, the BS fills random bits in the SPEECH frames corresponding to the positions of the TDMA frames identified by the fixed TDMA frame numbers in step C4. In this way, when the MS cannot demodulate the frames after receiving the data transmitted by the BS later, the user experience is not affected basically.

If in step C3, a latest half SID_UPDATE frame is filled for one of the paired MSs during source coding, in step C7, the latest filled half SID_UPDATE frame is transmitted to the MS. When the MS detects the SID_UPDATE frame later, the MS recovers the comfort noise carried in the latest half SID_UPDATE frame.

In the fourth embodiment, the BS sets the positions of the TDMA frames identified by fixed TDMA frame numbers to transmit SID_UPDATE frames; if the SPEECH frames corresponding to one of paired MSs at the positions of the TDMA frames identified by the TDMA frame numbers are NO_DATA frames, TDMA frames are guaranteed to be transmitted to the paired MSs at the positions of the TDMA frames identified by the fixed TDMA frame numbers. Therefore, when an MS measures the TDMA frames to be measured in the DTX phase later, interference of another MS on the MS still exists normally, so as to ensure that RXLEV_SUB and RXQUAL_SUB measurement values of the MS are correct. In this way, the RXLEV_SUB and RXQUAL_SUB measurement values can guide the BS to control power and adjust alpha-QPSK paired power, and the receiver can detect the latest environment noise in the latest filled SID_UPDATE frame.

### Embodiment 5

As shown in FIG 7, a BS provided in a fifth embodiment includes:
a determining unit 701, configured to determine frame numbers of radio frames to be measured by an MS which is one of paired MSs sharing a same timeslot; and
a transmitting unit 702, configured to transmit radio frames to both of the paired MSs at positions of the radio frames identified by the frame numbers.

The frame numbers of radio frames to be measured by the MS are the frame numbers of radio frames corresponding to SID_UPDATE frames or SACCH frames of a first MS of paired MSs; in this case, the transmitting unit 702 is configured to transmit the radio frames corresponding to the SID_UPDATE frames or SACCH frames to the first MS, and at the positions of the radio frames identified by the frame numbers, construct radio frames to be transmitted to a second MS by using random bits and transmit the constructed radio frames. Or the transmitting unit 702 includes: a filling unit, configured to fill newly defined frames or existing frames in the SPEECH frames, which is corresponding to the positions of the radio frames identified by the frame numbers, of a second MS, where in the frame sequence of a second MS, the existing frames are SPEECH frames before the SPEECH frames corresponding to the positions of the radio frames identified by the frame numbers; and a first transmitting unit, configured to transmit radio frames corresponding to SID_UPDATE frames or SACCH frames to a first MS and transmit radio frames corresponding to the filled SPEECH frames to the second MS.

Or the determining unit 701 is specifically configured to obtain fixed frame numbers of radio frames to be measured by the MS.

In this case, the transmitting unit 702 includes:
a first filling unit, configured to, in TCH/AHS mode, fill SID_UPDATE frames in SPEECH frames corresponding to positions of radio frames identified by fixed frame numbers when the SPEECH frames corresponding to the positions of the radio frames identified by the fixed frame numbers are NO_DATA frames and SID_UPDATE frames are available;
a first converting unit, configured to interleave the filled SPEECH frames with radio frames; and
a second transmitting unit, configured to transmit the radio frames.

Or the transmitting unit 702 includes:
a judging unit, configured to, in TCH/AHS mode, judge whether a previous frame of the SPEECH frames corresponding to positions of radio frames identified by fixed frame numbers is a NO_DATA frame;
a second filling unit, configured to fill half SID_UPDATE frames in the SPEECH frames corresponding to the positions of the radio frames identified by the fixed frame numbers when SID_UPDATE frames are available;
a first converting unit, configured to interleave the filled SPEECH frames with radio frames; and
a second transmitting unit, configured to transmit the radio frames.

Preferably, the transmitting unit 702 further includes: a third filling unit, configured to, fill, in TCH/AFS mode, random bits in SPEECH frames corresponding to positions of radio frames identified by fixed frame numbers when no SID_UPDATE frame is available or fill, in TCH/AHS mode, random bits in the SPEECH frames corresponding to the positions of the radio frames identified by the fixed frame numbers when no SID_UPDATE frame is available and when the judgment result of the judging unit is positive.

Or the transmitting unit 702 further includes: a second converting unit, configured to interleave data in a previous frame of the SPEECH frames with radio frames identified by fixed frame numbers when the judgment result of the judging unit is negative.

In the fifth embodiment, the frame numbers of radio frames to be measured by the MS are determined, and radio frames are guaranteed to be transmitted to both of the paired MSs at the positions of the radio frames identified by the frame numbers; when radio frames to be measured by an MS are transmitted, the radio frames are also guaranteed to be transmitted to another MS; when an MS measures the radio frames to be measured in the DTX phase, interference of another MS on the MS still exists, so as to ensure that correct measurement values of RXLEV_SUB and RXQUAL_SUB can be obtained.

### Embodiment 6

A network system provided in a sixth embodiment includes a BS.

The BS is configured to determine frame numbers of radio frames to be measured by an MS which is one of paired MSs sharing a same timeslot, and transmit radio frames to both of the paired MSs at positions of the radio frames identified by the frame numbers.

Specifically, the BS can determine frame numbers of radio frames corresponding to SID_UPDATE frames or SACCH frames of a first MS in the paired MSs, transmit the radio frames corresponding to the SID_UPDATE frames or SACCH frames to the first MS in the paired MSs, construct radio frames to be transmitted to a second MS in the paired MSs, and transmit the radio frames to the second MS.

Alternatively, the BS obtains fixed frame numbers of radio frames to be measured by the MS; in TCH/AFS mode, the BS fills SID_UPDATE frames in SPEECH frames corresponding to positions of the radio frames identified by fixed frame numbers when the SPEECH frames corresponding to the positions of the radio frames identified by the fixed frame numbers are NO_DATA frames and SID_UPDATE frames are available, and transmits the radio frames corresponding to the SID_UPDATE frames; the BS fills random bits in the SPEECH frames corresponding to the positions of the radio frames by the fixed frame numbers when no SID_UPDATE frame is available, and transmits the radio frames corresponding to the random bits. In TCH/AHS mode, when the SPEECH frames corresponding to the positions of the radio frames identified by the fixed frame numbers and a previous frame of the SPEECH frames are NO_DATA frames and SID_UPDATE frames are available, the BS fills half SID_UPDATE frames in the SPEECH frames corresponding to the positions of the radio frames identified by the fixed frame numbers, and transmits radio frames corresponding to the half SID_UPDATE frames; when no SID_UPDATE frame is available, the BS fills random bits in the SPEECH frames corresponding to the radio frames identified by the fixed frame numbers, and transmits radio frames corresponding to the random bits. In TCH/AHS mode, when the SPEECH frames corresponding to the positions of the radio frames identified by the fixed frame numbers are NO_DATA frames and a previous frame of the SPEECH frames is not a NO_DATA frame, the BS transmits the radio frames filled with the data of the previous frame to the MS at the positions of the radio frames identified by the fixed frame numbers. The BS of the network system in the sixth embodiment determines the frame numbers of radio frames to be measured by the MS, and guarantees that radio frames are transmitted to both of the paired MSs at the positions of the radio frames identified by the frame numbers. In this way, radio frames are guaranteed to be transmitted to another MS when radio frames to be measured by an MS are transmitted; when an MS measures the radio frames to be measured in the DTX phase, interference of another MS on the MS still exists, so as to ensure that correct RXLEV_SUB and RXQUAL_SUB measurement values can be obtained.

Persons of ordinary skill in the art may understand that all or part of the steps of the method according to the embodiments of the present invention may be implemented by a program instructing relevant hardware. The program may be stored in a computer readable storage medium, such as a read only memory (ROM), a magnetic disk, or a compact disk-read only memory (CD-ROM).

Detailed above are a method, a system, and a device for transmitting radio frames according to the embodiments of the present invention. Although the principle of the present invention is s described through some exemplary embodiments, the embodiments are described for better understanding the methods and core ideas of the present invention, and the invention is not limited to such embodiments. It is apparent that those skilled in the art can make modifications and variations to the invention without departing from the spirit and scope of the invention. The invention is intended to cover the modifications and variations provided that they fall within the protection scope defined by the following claims or their equivalents.

## Claims

1. A method for transmitting radio frames, comprising:
determining frame numbers of radio frames to be measured by a mobile station, MS, which is one of paired MSs sharing a same timeslot; and
transmitting radio frames to both of the paired MSs at positions of the radio frames identified by the frame numbers.

2. The method according to claim 1, wherein:
the paired MSs comprise a first MS and a second MS;
the frame numbers of radio frames to be measured by the MS are frame numbers of radio frames corresponding to updated silence insertion descriptor SID_UPDATE, frames or slow associated control channel SACCH, frames of the first MS;
the step of transmitting radio frames to both of the paired MSs at the positions of the radio frames identified by the frame numbers comprises:
transmitting to the first MS radio frames corresponding to the SID_UPDATE frames or the SACCH frames; and
by filling random bits at the positions of the radio frames identified by the frame numbers, constructing radio frames to be transmitted to the second MS, and transmitting the radio frames to the second MS.

3. The method according to claim 1, wherein:
the paired MSs comprise a first MS and a second MS;
the frame numbers of radio frames to be measured by the MS are frame numbers of radio frames corresponding to updated silence insertion descriptor, SID_UPDATE, frames or slow associated control channel,SACCH, frames of the first MS;
the step of transmitting radio frames to both of the paired MSs at the positions of the radio frames identified by the frame numbers comprises:
filling newly defined frames or existing frames in SPEECH frames, which is corresponding to the positions of the radio frames identified by the frame numbers, of the second MS, wherein in a frame sequence of the second MS, the existing frames are SPEECH frames before SPEECH frames corresponding to the positions of the radio frames identified by the frame numbers; and
transmitting to the first MS radio frames corresponding to the SID_UPDATE frames or the SACCH frames and transmitting to the second MS radio frames corresponding to the filled SPEECH frames.

4. The method according to claim 1, wherein:
the step of determining the frame numbers of radio frames to be measured by the MS is:
obtaining fixed frame numbers of radio frames to be measured by the MS.

5. The method according to claim 4, wherein:
the step of transmitting radio frames to both of the paired MSs at the positions of the radio frames identified by the frame numbers comprises:
in traffic channel, TCH/adaptive full rate speech, AFS, mode, when SPEECH frames corresponding to the positions of the radio frames identified by the fixed frame numbers are NO_DATA frames and SID-UPDATE frames are available, filling the SID_UPDATE frames in the SPEECH frames corresponding to the positions of the radio frames identified by the fixed frame numbers; and
transmitting radio frames corresponding to the SID_UPDATE frames.

6. The method according to claim 5, wherein:
the step of filling the SID_UPDATE frames is:
filling a latest SID_UPDATE frame.

7. The method according to claim 4, wherein:
the step of transmitting radio frames to both of the paired MSs at the positions of the radio frames identified by the frame numbers comprises:
in traffic channel, TCH/adaptive half rate speech, AHS mode, when SPEECH frames corresponding to the positions of the radio frames identified by the fixed frame numbers and a previous frame of the SPEECH frame are NO_DATA frame and SID_UPDATE frames are available, filling half SID_UPDATE frames in the SPEECH frames corresponding to the positions of the radio frames identified by the fixed frame numbers; and
transmitting radio frames corresponding to the half SID_UPDATE frames.

8. The method according to claim 7, wherein:
the step of filling half SID_UPDATE frames is:
filling a latest half SID_UPDATE frame.

9. The method according to any one of claims 5-8, wherein:
the step of transmitting radio frames to both of the paired MSs at the positions of the radio frames identified by the frame numbers comprises:
when no SID-UPDATE frame is available, filling random bits in the SPEECH frames corresponding to the radio frames identified by the fixed frame numbers; and
transmitting radio frames corresponding to the random bits.

10. The method according to claim 4, wherein:
the step of transmitting radio frames to both of the paired MSs at the positions of the radio frames identified by the frame numbers comprises:
in TCH/AHS mode, when SPEECH frames corresponding to the positions of the radio frames identified by the fixed frame numbers are NO_DATA frames and a previous frame of the SPEECH frames is not a NO_DATA frame, transmitting radio frames filled with data of the previous frame to the MS at the positions of the radio frames identified by the fixed frame numbers.

11. Abase station, BS, comprising:
a determining unit, configured to determine frame numbers of radio frames to be measured by a mobile station,(MS, which is one of paired MSs sharing a same timeslot; and
a transmitting unit, configured to transmit radio frames to both of the paired MSs at positions of the radio frames identified by the frame numbers.

12. The BS according to claim 11, wherein:
the frame numbers of radio frames to be measured by the MS are frame numbers of radio frames corresponding to updated silence insertion descriptor, SID_UPDATE, frames or slow associated control channel, SACCH, frames of a first MS in the paired MSs; and
the transmitting unit is configured to: transmit to the first MS radio frames corresponding to the SID-UPDATE frames or the SACCH frames, construct, by using random bits at the positions of the radio frames identified by the frame numbers, radio frames to be transmitted to a second MS in the paired MSs, and transmit the radio frames.

13. The BS according to claim 11, wherein:
the frame numbers of radio frames to be measured by the MS are frame numbers of radio frames corresponding to updated silence insertion descriptor SID_UPDATE, frames or slow associated control channel SACCH, frames of a first MS in the paired MSs;
the transmitting unit comprises:
a filling unit, configured to fill newly defined frames or existing frames in SPEECH frames, which is corresponding to the positions of the radio frames identified by the frame numbers, of a second MS, wherein in a frame sequence of the second MS, the existing frames are SPEECH frames before the SPEECH frames corresponding to the positions of the radio frames identified by the frame numbers; and
a first transmitting unit, configured to transmit to the first MS radio frames corresponding to the SID_UPDATE frames or the SACCH frames and transmit to the second MS radio frames corresponding to the filled SPEECH frames.

14. The BS according to claim 11, wherein:
the determining unit is configured to obtain fixed frame numbers of radio frames to be measured by the MS.

15. The BS according to claim 14, wherein:
the transmitting unit comprises:
a first filling unit, configured to fill, in an adaptive full rate traffic channel, TCH/AFS, mode, the SID_UPDATE frames in the SPEECH frames corresponding to the positions of the radio frames identified by the fixed frame numbers when the SPEECH frames corresponding to the positions of the radio frames identified by the fixed frame numbers are NO_DATA frames and SID_UPDATE frames are available;
a first converting unit, configured to interleave the filled SPEECH frames with radio frames; and
a second transmitting unit, configured to transmit the radio frames.

16. The BS according to claim 14, wherein:
the transmitting unit further comprises:
a judging unit, configured to judge, in the an adaptive full rate traffic channel, TCH/AHS, mode, whether a previous frame of the SPEECH frames corresponding to positions of radio frames identified by the fixed frame numbers is a NO_DATA frame;
a second filling unit, configured to fill half SID_UPDATE frames in the SPEECH frames corresponding to the positions of the radio frames identified by the fixed frame numbers when SID_UPDATE frames are available;
a first converting unit, configured to interleave the filled SPEECH frames with radio frames; and
a second transmitting unit, configured to transmit the radio frames.

17. The BS according to claim 15 or claim 16, wherein:
the transmitting unit further comprises:
a third filling unit, configured to fill, in the the adaptive full rate traffic channel, TCH/AFS mode, random bits in the SPEECH frames corresponding to the radio frames identified by the fixed frame numbers when no SID_UPDATE frame is available, or fill, in the TCH/AHSmode, random bits in the SPEECH frames corresponding to the radio frames identified by the fixed frame numbers when no SID_UPDATE frame is available and when a judgment result of the judging unit is the positions of the positive.

18. The BS according to claim 16, wherein:
the transmitting unit further comprises:
a second converting unit, configured to interleave data in the previous frame of the SPEECH frames with the radio frames identified by the fixed frame numbers when a judgment result of the judging unit is negative.

19. A network system, comprising:
a base station, BS, configured to determine frame numbers of radio frames to be measured by a mobile station, MS which is one of paired MSs sharing a same timeslot, and transmit radio frames to both of the paired MSs.
